# EUROPEAN PATENT APPLICATION

(11) **EP 2 777 926 A1**
(43) Date of publication of application: **17.09.2014**
(21) Application number: 13425039.8
(22) Date of filing: 14.03.2013
(51) Int. Cl.: B32B 5/18, B32B 27/40, B32B 15/08, E04B 1/94

(54) **Panel with fire barrier**

(71) Applicant: Dow Global Technologies LLC, Midland, MI 48674 (US)
(72) Inventor: The designation of the inventor has not yet been filed
(74) Representative: Notaro, Giancarlo

(57) **Abstract**

A panel (10) comprises:
- a first metal facing (A1);
- an insulating foam layer (D); and
- a fire barrier layer (B) between the first metal facing (A1) and the foam layer (D), the fire barrier layer (B) comprising a dispersion of expandable graphite in a polyisocyanurate polymer matrix, wherein:
- the polymer matrix is formed by reaction at an index of more than 250 of an isocyanate-containing reactant and a polyol reactant comprising a long chain polyol of equivalent weight of more than 300; and

the amount of expandable graphite per unit area of the panel is at least 200 g/m².

A panel arrangement with fire barrier material in the joint regions between panels and methods of forming the panel and panel arrangement are also described.

## Description

The invention relates to panels and panel arrangements including fire barriers, to constructions including such panels, and to methods of forming the panels and panel arrangements.

Rigid polymer foams provide good thermal insulation and are thus used in building components such as "sandwich" pre-insulated panels. Such panels typically include a rigid polyurethane/polyisocyanurate (PUR/PIR) foam core bonded to metal facing layers, for example of steel or aluminium, or stressed skins of metal foil. The panels are typically self-supporting and are used for example in internal partition walls, external walls, facades and roofs.

Such panels may be manufactured by a continuous process. A continuous lamination process typically uses a double belt/band arrangement wherein a liquid reaction mixture for forming a foamed polymer is deposited (poured or sprayed) onto a lower facing sheet, which may be flexible or rigid. An upper facing sheet is contacted with the polymer-forming mixture before it becomes cured and rigid. As an alternative ("inverse laminator"), the reaction mixture may be deposited onto the upper facing sheet. This process is discussed in "Polyurethane Handbook" (ed. Dr Guenter Oertel, Hanser Publishers 1985). An example of a continuous lamination process is given in US4118533.

A thin layer of non-expanded or slightly expanded polyisocyanate based polymer formed from isocyanate and polyol is in some cases used to promote adhesion between the metal facing and the foam core. This thin layer is referred to as the "additional polyurethane/polyisocyanurate layer" or "adhesion promoter layer" (APL). This process is described by way of example in US20120189838A1.

Lateral joints between panels are conventionally sealed with flexible foam gaskets.

Polymer foam core materials are typically combustible and leave little carbonaceous residue on burning. Thus, they provide only limited structural integrity under fire conditions. Structural integrity is important to prolong building stability and to maintain barriers to the passage of heat, smoke and fire.

The current fire resistance performance of metal faced sandwich panels, where the insulating layer is a PIR foam, is at best EI 60 on a 200 mm thick panel (where "E" refers to integrity and "I" to insulation, and is followed by the number of minutes for which the component is effective). Reference standards are EN 1363-1/2 and EN 1364-1.

Attempts have been made to improve this performance, for example by incorporating flame retardant additives in the foam and by using incombustible thick facing materials (e.g. gypsum).

EP0891860 discloses a fire-resistant composite panel with a layer of intumescent mat (e.g. graphite based mineral fibre stabilized material) interposed between a core of rigid foamed plastics material and a metal outer layer. The mat is perforated with holes to permit bonding between the core and the metal layer.

WO2006010697 (Huntsman) discloses inorganic modified PU/polyurea coating compositions obtainable by reacting water glass (aqueous alkali metal silicate) and optionally a polyol with an isocyanate. A sandwich panel is disclosed comprising a layer of said composition between the insulation layer and the facing. Joints within the sandwich panel can also be sealed with said coating. The fire performance of the coating can be further improved by adding flame retardants, for example expandable graphite.

US2008/0038516 (BASF) discloses a thermal insulation composite, comprising two metal sheets with a thermally-insulating core material, whereby, between the thermally-insulating core material and at least one of the metal sheets, a fire protection intumescent layer is arranged. The fire-protection layer intumescent composition may be based on alkali metal silicate, expandable graphite, or expandable mica.

The inventors have observed that when a typical sandwich panel is treated under furnace conditions, the steel facing quickly delaminates from the foam core and cracks appear in the foam.

In addition, it has been found that during a fire resistance test, temperatures rise faster at joints between panels compared to the bodies of the panels. As a result, joints are weak areas which affect the fire resistance performance of the entire panel.

Accordingly, the inventors filed PCT Patent Application No. PCT/EP2012/068069, relating to a panel comprising:
- a metal facing;
- an insulating foam layer; and
- at least one fire barrier layer between the metal facing and the foam layer, the fire barrier layer(s) comprising at least one of porous silica; hollow glass microspheres; glass fibres; an inorganic ceramifying composition; a dispersion in a polyurethane polymer matrix or polyurethane/polyisocyanurate polymer matrix or polyurethane/polyurea polymer matrix of expandable graphite; and to a method of forming a panel as described above, comprising the steps of:
- providing a first metal facing with at least one fire barrier layer;
- applying an insulating foam layer in the form of a liquid reaction mixture to the fire barrier layer(s); and
- applying a second metal facing to the insulating foam layer.

Example 2-6 of this application relates to a multilayer sandwich panel wherein the fire barrier layer comprises 10 wt% expandable graphite dispersed in a polyurethane modified polyisocyanurate polymer matrix formed from VORAMER™ MB 3171 polyol (from the Dow Chemical Company) and a 2.7 functionality PMDI isocyanate at index 200. Comparative Example 2-7 of this application relates to a multilayer sandwich panel including a mineral wool blanket.

In a first aspect, the present invention provides a panel comprising:
- a first metal facing;
- an insulating foam layer; and
- a fire barrier layer between the first metal facing and the foam layer, the fire barrier layer comprising a dispersion of expandable graphite in a polyisocyanurate polymer matrix, wherein:
- the polymer matrix is formed by reaction at an index of more than 250 of an isocyanate-containing reactant and a polyol reactant comprising a long chain polyol of equivalent weight of more than 300; and
- the amount of expandable graphite per unit area of the panel is at least 200 g/m².

Preferably, the panel further comprises a second metal facing on the opposite side of the foam layer from the first metal facing. A further fire barrier layer may or may not be present between the second metal facing and the foam layer. This fire barrier layer may or may not be the same as the first fire barrier layer.

Preferably, the panel is self-supporting.

### Fire Barrier Layer

The fire barrier layer is also referred to herein as the "intumescent layer" and the "first fire barrier layer". The fire barrier layer(s) is positioned between the foam core and the metal facing, and may conveniently be considered as a modified APL layer.

The fire barrier layer provides thermal barrier properties i.e. a temperature gradient in fire conditions. This is intended to improve the insulation performance during the fire resistance test. The suitability of a material to perform as thermal barrier material can be evaluated in a laboratory scale using the testing procedure described below, which is based on EN-1363. Alternatively, suitability can be evaluated by measuring temperature increase with a thermocouple positioned at the interface between the thermal barrier material and the foam or alternatively positioned in the foam at a certain distance from the interface.

Preferably, the fire barrier layer has a thermal conductivity (k-factor) of less than 0.2 W/(m*K).

Expandable graphite is used to provide thermal barrier properties in the fire barrier layer(s). Expandable graphite (an intercalation compound of graphite also referred to as "exfoliating graphite") is a particulate expandable under fire conditions. Expandable graphite may be prepared for example by immersing natural flake graphite in a bath of chromic acid, then concentrated sulfuric acid. Preferably, the expandable graphite particles are of mean particle size 200 to 300 µm. Preferably, the expandable graphite is capable of expansion to at least 200 times (for example 250 to 350 times) its initial volume.

Different expandable graphites have different expansion temperatures. Preferably the expandable graphite begins its expansion at around 160 to 170 °C. A low expansion temperature is desirable where the fire barrier layer is on the opposite side of the foam core from the fire.

Preferred types of expandable graphite include QUIMIDROGA Grade 250™ and NORD-MIN KP 251™ (commercially available from Nordmann Rassmann).

The inventors believe that when exposed to the heat of a developing fire, the intumescent layer undergoes a physical/chemical modification leading to the formation of a highly expanded porous carbonaceous char that when on the fire side of the foam core helps to protect the foam core from flame impingement, and in general helps by sealing cracks in the foam core and contributes to provide thermal barrier properties.

The amount of expandable graphite present per unit area of the panel surface is calculated based on layer thickness, layer density, and wt% of expandable graphite incorporated in the reactants:
Amount of (wt% of expandable graphite expandable in fire barrier layer x density graphite per unit of fire barrier layer x thickness area of fire barrier layer)

It is believed that the amount of expandable graphite per unit area determines the attainable expansion of the layer and the extent of fire protection. The amount of expandable graphite per unit area of the panel is at least 200 g/m², more preferably at least 300 g/m², 500 g/m² or 700 g/m². In a preferred embodiment, the amount of expandable graphite per unit area is at least 900 g/m² e.g. about 1000 g/m².

The expandable graphite is dispersed in a polyisocyanurate (PI) polymer matrix. The term "PI" is used herein for polyisocyanate-based polymers formed at high isocyanate index. The polymer matrix will include both isocyanurate and urethane groups. Polyisocyanate-based polymer typically has good adhesive properties to the foam core, further fire barrier layers and/or the metal facing(s).

The PI polymer matrix is formed from a polyol component including at least one polyol reactant and an isocyanate component including at least one isocyanate-containing reactant.

The polyol component includes at least one long chain polyol having an equivalent weight of more than 300, preferably more than 1000 and more preferably more than 1200. Equivalent weight (EW) is defined as the weight of the compound per reactive site and can be calculated as EW = 56.1 X 1000/OH where OH = hydroxyl number.

Preferably, the at least one polyol reactant consists of one or more long chain polyols i.e. no other polyols are present. Long chain polyols control crosslinking density and reduce brittleness. Such polyols are also believed to promote bonding to facings e.g. steel facings.

Preferably, the long chain polyol is a polyether polyol or a polyester polyol. Suitable polyols include VORANOL™ polyols (polyether polyols from The Dow Chemical Company) e.g. VORANOL™ CP 4702 (a polyether polyol formed by adding propylene oxide and ethylene oxide to a glycerine starter, nominal functionality 3, EW 1580 and VORANOL™ P1010 (a polyether polyol formed by adding propylene oxide to a propylene glycol starter, nominal functionality 2, EW 508); and STEPANPOL™ polymers (polyester polyols from Stepan Company) e.g. STEPANPOL™ PS 70L. Example 1 of US6387447 discloses a suitable polyol which is a polyether of OH number 36 formed by polyaddition of 83 wt% propylene oxide and 17 wt% ethylene oxide to trimethylolpropane.

The preferred functionality of the long chain polyol is 2 to 3. Preferred initiators include glycol, glycerine and trimethylolpropane.

One or more non-long chain polyols may also be included.

Suitable isocyanate-containing reactants used in the present invention are aliphatic, cycloaliphatic, alicyclic, arylaliphatic, aromatic polyisocyanates and derivatives thereof. Such derivatives include allophanate, biuret and NCO terminated prepolymer. Aromatic isocyanates, especially aromatic polyisocyanates are preferred. It is preferred to use aromatic diisocyanates such as isomers of toluene diisocyanate (TDI), crude TDI, isomers of diphenyl methane diisocyanate, and higher functional polymethylene polyphenyl polyisocyanate.

In one embodiment, it is preferred to use polymethylene polyphenylene polyisocyanates (MDI). As used herein MDI refers to polyisocyanates selected from diphenylmethane diisocyanate isomers, polyphenyl polymethylene polyisocyanates and derivatives thereof bearing at least two isocyanate groups. The crude, polymeric or pure MDI can be reacted with polyols or polyamines to yield modified MDI. The MDI advantageously has an average of from 2 to 3.5, and preferably from 2.0 to 3.2 isocyanate groups per molecule.

In a preferred embodiment, VORANATE™ M229 PMDI isocyanate (a polymeric methylene diphenyl diisocyanate with an average of 2.7 isocyanate groups per molecule, from The Dow Chemical Company) is used. Blends of polymeric and monomeric MDI may also be used.

An appropriate index for forming the PI polymer matrix is more than 250, preferably more than 300, more preferably more than 500, and most preferably more than 700. The term "index" refers to the isocyanate index, a measure of the number of equivalents of isocyanate-containing compound added per 100 theoretical equivalents of isocyanate-reactive compound. An isocyanate index of 100 corresponds to one isocyanate group per isocyanate- reactive hydrogen atom present, such as from water and the polyol composition. A higher index indicates a higher amount of isocyanate-containing reactant. A high isocyanate index is believed to lead to better thermal stability (as shown in the examples) and reaction-to-fire behavior, including reduced smoke production.

A catalyst may be used in forming the PI polymer matrix. Appropriate catalysts include trimerisation catalysts (which promote reaction of isocyanate with itself). Examples of trimerisation catalysts include tris(dialkylaminoalkyl)-s-hexahydrotriazines such as 1,3,5-tris(N,N-dimethylaminopropyl)-s-hexahydrotriazine; DABCO™ TMR 30; DABCO™ K-2097 (potassium acetate), DABCO™ K15 (potassium octoate); POLYCAT™ 41, POLYCAT™ 43, POLYCAT™ 46, DABCO™ TMR, CURITHANE™ 52; tetraalkylammonium hydroxides such as tetramethylammonium hydroxide; alkali metal hydroxides such as sodium hydroxide; alkali metal alkoxides such as sodium methoxide and potassium isopropoxide; and alkali metal salts of long-chain fatty acids having 10 to 20 carbon atoms and, in some embodiments, pendant hydroxyl groups.

Chain extenders, cross-linking compounds and other additives may be included. Examples of chain extenders include dipropylene glycol, tripropylene glycol, diethyleneglycol, polypropylene and polyethylene glycol.

Preferably, the fire barrier layer is 2 to 20 mm (more preferably 2 to 15 mm, e.g. 3 to 10 mm) in thickness.

Preferably, the fire barrier layer is continuous and is continuously bonded (in a single area without spaces therein) to the metal facing and to the insulating foam layer.

Preferably, the fire barrier layer is rigid. Suitably it has a glass transition temperature of at least 50 °C e.g. about 100 °C. Suitably it has a Young's modulus according to UNI EN ISO 604 of at least 30 MPa e.g. about 80 MPa.

Preferably, the fire barrier layer has a density of at least 200 g/L, and more preferably a density of at least 500 g/L.

### Further Fire Barrier Layers

One or more further fire barrier layers may be present. These may provide some or all of thermal barrier properties; structural integrity barrier properties; endothermic properties. Where these properties are provided by the same layer, they may be provided by different materials or by the same material.

Further fire barrier layer(s) may be between the first metal facing and the foam layer on either or both sides of the first fire barrier layer and/or, as mentioned above, may be between the second metal facing and the foam layer.

Where further fire barrier layer(s) are present between the first metal facing and the foam layer, the layers may be formed in any order on the metal facing. If the further fire barrier layer does not have adhesive properties, it may be desirable to position it between the first fire barrier layer and the foam layer.

The suitability of a material to perform as a structural integrity barrier material can be evaluated, for example, by placing a sample of the said material applied on a metal skin into a muffle heated with a temperature curve comparable to a fire resistance test and then verifying the absence of cracks and voids and checking for residual mechanical properties. The structural integrity barrier material preferably forms a coherent, strong char layer which will reduce the tendency of the underlying foam core to crack.

Endothermic materials are those which can absorb heat (especially latent heat) via an "endothermic event" e.g. evaporation, wherein latent heat of evaporation is absorbed. For example, the further fire barrier layer may include some forms of embedded water which is liberated and evaporated under fire conditions. Suitable materials are discussed in PCT/IT2011/000418.

A preferred further fire barrier layer is mineral wool, which provides thermal barrier properties. Suitably, a layer of mineral wool of thickness 30 to 50 mm is used. Mineral wool blankets and/or slabs are commercially available e.g. ROCKWOOL™ from Rockwool Italia S.p.A. Preferably, the mineral wool is positioned between the first fire barrier layer and the foam core layer.

Additional suitable further fire barrier materials are discussed in PCT/EP2012/068069. These include:
- a ceramifying mixture of inorganic compounds in a polymer matrix;
- an inorganic modified adhesive polyurethane/polyurea coating;
- glass fibres in a polymer matrix;
- porous silica in a polymer matrix;
- hollow glass microspheres in a polymer matrix

Where a fire barrier layer does not have good adhesive properties, a separate adhesive may be used.

### Ceramifying mixture of inorganic compounds in polymer matrix

A dispersion of a ceramifying mixture of inorganic compounds in a polymer matrix can be used as a structural integrity barrier material in the further fire barrier layer(s).

The term "ceramifying composition" includes compositions which decompose and undergo chemical reaction under fire conditions to form a porous, self-supporting ceramic product.

Preferred mixtures include silicate minerals and inorganic phosphates. An additional inorganic filler and/or heat expandable material may be present. The ceramifying mixture may for example comprise some or all of aluminium trihydroxide, talc and ammonium polyphosphate. Examples of preferred mixtures include aluminium trihydroxide (ATH)/talc/ammonium polyphosphate (APP); talc/APP/zinc borate/expandable graphite.

Preferably, the polymer matrix is a polyurethane-modified polyisocyanurate polymer. Such polymers may be formed from a polyol (e.g. a polyester polyol) and an isocyanate (e.g. an organic polyisocyanate such as a polymeric methylene diphenyl diisocyanate, PMDI, e.g. 2.7 functionality). A catalyst is used. An appropriate index is 180 or more. Preferred polyols include VORAMER™ polyols (from The Dow Chemical Company). Alternatively, the polymer matrix may be a polyurethane (PU) polymer, but this is less preferred. Such polymers may be formed from a polyol (e.g. a polyether polyol) and an isocyanate (e.g. an organic polyisocyanate such as PMDI, e.g. 2.7 functionality). A catalyst is used. An appropriate index is 80 to 180. Preferred polyols include VORANOL™ polyols (from The Dow Chemical Company).

Preferably, the ceramifying composition is present in an amount of 30 to 70 wt% based on the total weight of the layer.

### Adhesive polyurethane/polyurea

An adhesive polyurethane/polyurea coating formed by reaction of sodium silicate aqueous solution (common name: water glass) with a hydrophilic prepolymer can be used as a structural integrity barrier material in the further fire barrier layer(s). WO200601069 (Huntsman, mentioned above) relates to such waterglass based PU/polyurea coatings. Other fire barrier materials may be dispersed in the coating. A preferred hydrophilic polyurethane pre-polymer is a Dow HYPOL™ class isocyanate.

The inventors have appreciated also that such a coating may act as an endothermic material. Some water may remain kinetically entrapped in the polymer and/or inorganic networks of the coating, since viscosity rises rapidly during the polymer formation reaction. Thus, when the coating is heated the temperature on a non-exposed face of the polymer may remain at about 100°C for some time while water is evaporated.

### Glass Fibres

Glass fibres can be used as a structural integrity barrier material in the further fire barrier layer(s). Chopped glass fibres of length 5 mm to 75 mm and/or diameter 10 to 13 µm are preferred. Alternatives to glass fibres include rock fibres, basalt fibres and carbon fibres. The fibres are preferably dispersed in a polymer matrix, for example a polymer matrix of the type discussed under "Ceramifying mixture of inorganic compounds in polymer matrix" above.

### Porous silica

Porous silica can be used as a thermal barrier material in the further fire barrier layer(s).

A preferred form of porous silica is nanoporous silica and particularly silica aerogel. Porous silica is preferably used dispersed in a polymer matrix. The polymer matrix may be pre-formed or may be formed in situ.

Pre-formed dispersions of nanoporous silica in polymer matrix are commercially available as "aerogel blankets" e.g. Cabot Thermal Wrap™. These can comprise granules of silica aerogel dispersed in non-woven polymer fibres e.g. of polyethylene and/or polyester.

Dispersions of nanoporous silica in a polymer matrix may be formed *in situ* using commercial silica aerogel powder. A commercial silica aerogel nanoporous powder is Cabot Nanogel™.

Preferably, the porous silica is dispersed in a hydrophilic polymer matrix. An adhesive polyurethane/polyurea coating with structural integrity barrier properties of the type discussed above is particularly suitable. Alternatively, a polyurethane or polyurethane-modified polyisocyanurate coating of the type discussed under "Ceramifying mixture of inorganic compounds in polymer matrix" above may be used.

Preferably, the porous silica is present in an amount of 1 to 10 wt% based on the total weight of the layer.

### Hollow glass microspheres

Hollow glass microspheres can be used as a hybrid structural integrity barrier material and thermal barrier material in the further fire barrier layer(s). Suitable materials are discussed in WO2010065724, and are commercially available e.g. S35 Glass Bubbles™ from 3M. The particles are preferably used in a polymer matrix, e.g. using one of the polymer materials discussed above.

Preferably, the hollow glass microspheres have an average diameter in the range of 10 to 120 µm. Preferably, the hollow glass microspheres are present in an amount of 5 to 50 wt% based on the total weight of the layer. In a preferred embodiment, the polymer layer is filled with 20 wt% S35 microspheres.

### Facing

As explained above, the panel includes a first metal facing. Typically, a second metal facing is included in the panel on the opposite face from the first metal facing. Each metal facing is preferably of steel (e.g. lacquered, pre-painted or galvanised steel) or aluminium. Preferably, each metal facing is 0.2 to 2 mm in thickness, more preferably 0.3 to 0.8 mm (e.g. 0.4 to 0.6 mm) in thickness.

The first and second metal facings may be the same or different. Typically, one facing ("external facing") is intended to be orientated towards the outside of a construction (e.g. a building or other structure) in use; whereas the other facing ("internal facing") is intended to be orientated towards the inside in use. It is generally expected that a fire will start on the inside of a building i.e. on the internal facing side.

Where the panels are used on an internal wall, the term "internal facing" may be used for the facing positioned towards the side (e.g. room) where fire risk is higher (taking into account for example the risk of operations and/or thermal load).

The external facing may be corrugated, for example when the panel is a roof panel. The internal and external facings may have non-symmetrical joint profiles, for example where concealed joints are to be formed between adjacent panels.

### Foam Core

As explained above, the panel includes an insulating foam layer (also referred to as a foam core). Suitably, the foam core is rigid. Preferably, the foam core is 20 to 250 mm in thickness.

The foam core preferably comprises a polyisocyanurate foam (PIR); it may alternatively be of polyurethane (PUR). Preferred foams are formed from polyol (added with a blowing agent and a catalyst) and an isocyanate (e.g. an organic polyisocyanate such as high functional PMDI or other isocyanate discussed under "Fire Barrier Layer" above). A preferred index is 180 or more. Preferred materials include VORATHERM™ polyols which provide foams with good fire performance properties; VORATHERM™ catalysts and VORANATE™ isocyanates (all from the Dow Chemical Company). A suitable blowing agent is n-pentane.

The foam core may optionally include further components e.g. for reinforcement and/or to improve reaction to fire properties. For example, glass fibres may be embedded through the foam core as described in US4118533.

### Panel Structure

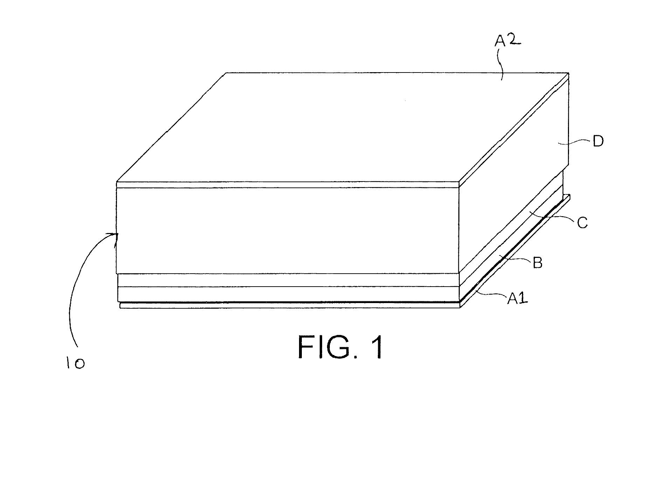

In a preferred embodiment, the panel structure is as shown in Fig. 1 i.e. the panel 10 consists of a first facing A1, a fire barrier layer B, a further fire barrier layer C, a foam core D and a second facing A2 in this order. It is generally preferred for the fire barrier layers B, C to contact the first facing A1 and the foam core D. The first facing A1 may be the internal facing or the external facing.

In an alternative preferred embodiment, further fire barrier layer C may be absent.

Alternative panel structures are possible. For example, further fire barrier layers may be included on either side of the foam core as discussed above.

### Manufacturing Process

In a second aspect, the invention provides a method of forming a panel as described herein, comprising the steps of:
- providing a first metal facing with a fire barrier layer in the form of a liquid reaction mixture comprising a dispersion in an isocyanate-based reaction mixture of expandable graphite; and
- applying an insulating foam layer in the form of a liquid reaction mixture to the fire barrier layer.

Preferably, the method further comprises applying a second metal facing to the insulating foam layer.

The method preferably includes a step of forming the fire barrier layer by reacting a polyol reactant comprising a long chain polyol of equivalent weight of more than 300 with an isocyanate-containing reactant at an index of more than 250 to form the PI matrix with expandable graphite dispersed therein. Preferably, a liquid fire barrier layer forming composition containing dispersed expandable graphite is provided, and more preferably the fire barrier layer forming composition is a liquid isocyanate-based reaction mixture.

The liquid isocyanate-based reaction mixture is preferably formed by mixing a polyol component, an isocyanate component and expandable graphite. Methods for introduction of the expandable graphite are discussed below.

The polyol component and/or the isocyanate component may also include one or more catalysts, cross-linkers, chain extenders, surfactants, flame retardants, smoke suppressants, drying agents, fillers and other additives as mentioned above. Some catalysts are solids or crystals and can be dissolved in the proper solvent which can be the polyol, water, dipropylene glycol or any other carrier.

Various methods may be used for introducing expandable graphite into the liquid reaction mixture. For example, expandable graphite may be pre-mixed with the polyol component (e.g. in an amount of 30 wt%) or with the isocyanate component; expandable graphite may be dispersed at high concentration into a carrier which is introduced into the reaction mixture; expandable graphite may be introduced directly into the reaction mixture. These methods may for example be implemented as follows:
- A pre-mixture of expandable graphite with the polyol and/or isocyanate component(s) can be delivered using a low-pressure gear pump to the mixing head, where it is mixed with the parent component by means of a dynamic stirrer.
- A dispersion of expandable graphite (expandable graphite slurry) in a carrier (e.g. of polyol or a flame retardant) can be dosed by mean of a low-pressure gear pump as an axial stream into a high-pressure mixing head. According to this embodiment the expandable graphite slurry can enter the mixing head through a nozzle orthogonal to the two high-pressure impingement streams of polyol component and isocyanate component. A suitable apparatus is Cannon SoliStream™.

- Expandable graphite may be directly introduced in the mixing head e.g. using Desma™ apparatus (Desma™ Tec is a mixing head which allows mixing of liquid polyol component, liquid isocyanate component and solid expandable graphite via a granulate screw drive).
- Expandable graphite may be added externally after the reaction mixture has exited the mixing head (a suitable mixing head is described in US6065862).

Preferably, the fire barrier layer forming composition is applied to at least the first facing. In one preferred embodiment, the fire barrier layer is formed on the upper surface of a lower facing: application of a liquid reaction mixture to the lower facing is of course easier than application to the underside of an upper facing. The lower facing is typically the external facing mentioned above i.e. the facing to be orientated in use towards the outside of a building.

Preferably, the further fire barrier layer(s), if present, are applied in a similar way. Additionally or alternatively, further fire barrier layer(s) may be applied in solid form. A fire barrier layer in solid form may be secured with an adhesive composition. Suitably, an adhesive is used and is applied in liquid form. However, if a previous fire barrier layer has been applied in liquid form an adhesive composition may not be necessary.

Preferably, there is a delay between the step of applying the fire barrier layer forming composition and the step of applying the foam layer forming composition to allow for gelling of the fire barrier layer. Suitably this delay is 10 s or more.

Panels in accordance with the invention may be manufactured in a continuous or discontinuous process. A continuous process is preferred.

In one preferred embodiment, the panels are produced in a continuous lamination process with the following steps: i) conveying a lower facing sheet, ii) dispensing on the lower facing sheet a liquid reaction mixture for forming the fire barrier layer, iii) allowing the fire barrier layer reaction mixture to solidify at least partially, iv) dispensing a liquid reaction mixture for forming the core layer on top of the fire barrier layer, v) conveying an upper facing sheet, vi) allowing the core layer reaction mixture to expand, cure and bond to the facing and fire barrier layer (typically under continuous pressure e.g. using a double conveyor). Separate panels may then be formed by cutting.

An arrangement to ensure even distribution of the liquid reaction mixtures across the width of the line may be used. For example, a discharging hose having an end travelling across the width of the line (e.g. by means of a swing bar) may be used. Alternatively or additionally, a pipe extending across the width of the line and provided with a number of discharging holes may be used.

A discontinuous process using moulds may alternatively be used. In such a method, the metal facings are suitably positioned in a mould (preferably a heated mould) and the reaction mixture for forming the insulating foam layer injected (e.g. using a foaming machine) so as to fill the mould and adhere to the metal facings and/or any other layer. The fire barrier layer(s) may be added before the metal facings are positioned in the mould or while the metal facings are in the mould (before foam injection).

### Joint Fire Barrier

In a third aspect, the invention relates to a panel arrangement comprising:
- two or more adjacent panels, optionally as described above, each panel comprising a metal facing and an insulating foam layer, and
- a fire barrier material located in a joint region between adjacent panels,
wherein the fire barrier material comprises a dispersion of expandable graphite in a polyisocyanurate polymer matrix, wherein;
the polymer matrix is formed by reaction at an index of more than 250 of an isocyanate-containing reactant and a polyol reactant comprising a long chain polyol of equivalent weight more than 300; and
the amount of expandable graphite per unit area is at least 200 g/m².

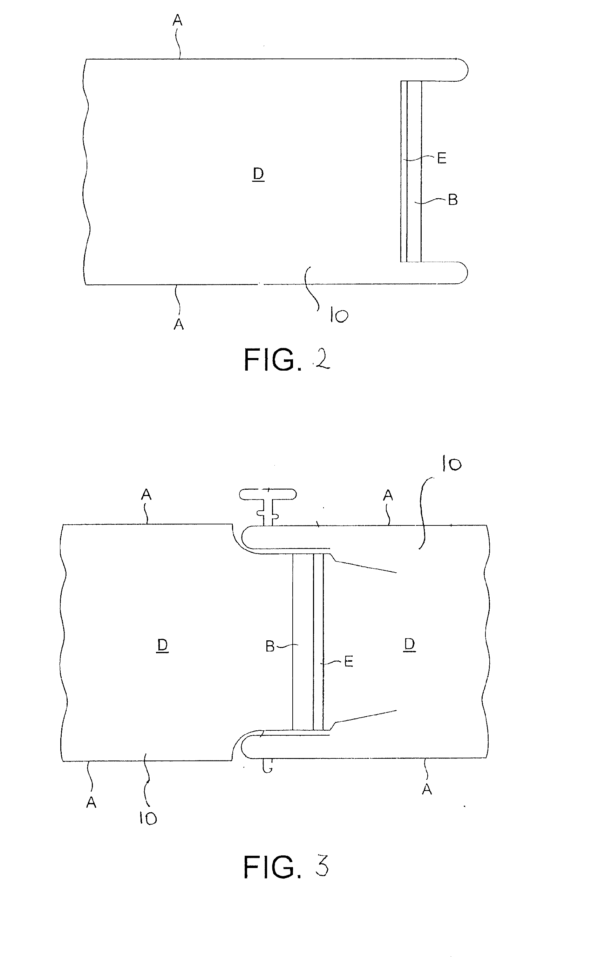

An example is shown in Figs. 2 and 3.

Suitable joint fire barrier materials are the fire barrier materials discussed above.

In a fourth aspect, the invention relates to a method of forming such a panel arrangement.

Suitably, panels are mounted with overlapping portions e.g. a panel having a male portion along its edge may be mounted to a panel having a complementary female portion along its edge. The panels may be mounted to one another and/or to the building structure. The panels are preferably joined by friction fit and/or using screws.

Optionally, a gasket is also positioned in the joint region. The gasket may be formed of foam, and is preferably formed of flexible foam. The gasket is typically fed from rolls during panel production.

The fire barrier material is preferably applied in the form of a liquid reaction mixture to the joint region, for example by pouring or spraying.

This may be done during the panel production, after panel production or on site before panel installation. Two or more fire barrier materials may be included, for example by including two or more fire barrier layers.

### Further Aspects of Invention

In a further aspect, the invention relates to a construction (e.g. a building or a building structure such as a wall or roof) comprising one or more panels as described above, optionally with at least one first metal facing orientated towards the outside of the construction ("cold side"). Where the construction does not form an outer wall/roof of a building, at least one metal facing may be orientated towards the "cold side" i.e. away from the side where fire risk is higher ("hot side"), as mentioned above.

In another aspect, the invention relates to a panel optionally as described comprising:
- a first metal facing to be orientated towards the outside of a construction in use;
- a second metal facing to be orientated towards the inside of the construction in use;
- an insulating foam layer between the first and second metal facings; and
- a fire barrier layer between the first metal facing and the foam layer,
wherein no fire barrier layer is present between the second metal facing and the foam layer, or wherein any fire barrier layer present between the second metal facing and the foam layer has a weight of no more than 1000 g/m² or a thickness of no more than 2 mm.

Preferably, the thickness of any fire barrier layer present between the second metal facing and the foam layer has a thickness of no more than 0.3 mm.

In one preferred embodiment, no fire barrier layer is present between the second metal facing and the foam layer. Suitably, no layer of any type is present between the second metal facing and the foam layer. Alternatively, a layer which does not provide significant thermal barrier properties, structural integrity properties and/or endothermic properties may be present. An example of such a layer is an adhesive layer.

Features described in connection with any aspect of the invention can be used in combination with any other aspect of the invention.

### Figures

Fig. 1 shows a perspective view of a panel according to a preferred embodiment of the invention. The layers, which may not all be present, are in order: metal facing A1; fire barrier layer B; further fire barrier layer C; insulating foam D; metal facing A2.
Fig. 2 shows a side view of a panel including a joint region according to a second preferred embodiment of the invention. The components, which may not all be present, are: metal facing A; standard gasket E; fire barrier layer B; insulating foam D.
Fig. 3 shows a side view of an arrangement of the panel of Fig. 2 mounted to an adjacent panel. Self-threading screws are shown at the ends of the joint region.

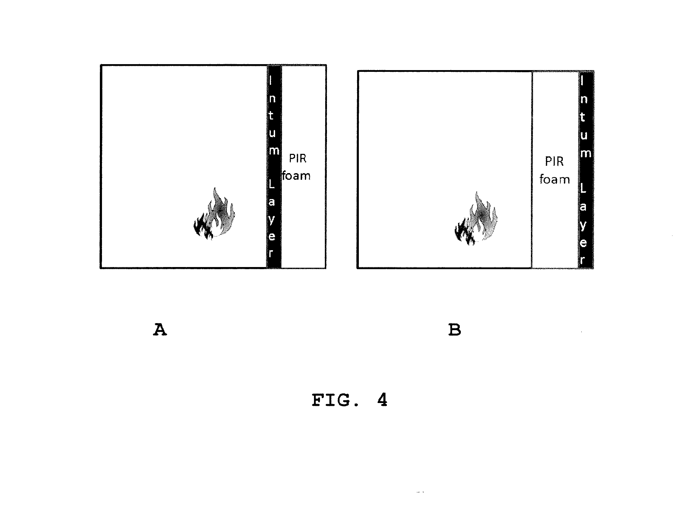

Fig. 4 shows the arrangement of the foam core ("PIR foam") and fire barrier layer ("Intum. Layer") relative to the fire: (A) when the fire barrier layer is on the side of the foam core close to the fire ("hot side") and (B) when the fire barrier layer is on the side of the foam core remote from the fire ("cold side").
Fig. 5 shows the results of thermogravimetric analysis for the PI polymer of Example 1 and a comparative lower index polymer. x axis = temperature (°C), y axis = remaining mass (%).

### Examples

The invention will be further described with reference to the following non-limiting examples.

### Example 1

70 x 70 cm insulated metal panels having an overall thickness of 100 mm were prepared using a fire barrier layer forming composition and a foam core layer forming composition as set out in Table 1. The panels were as shown in Fig. 1, with no further fire barrier layer C present.

**TABLE 1**

| **PIR foam forming composition D (parts by weight)** | |
|---|---|
| VORATHERM™ CN 804 polyol | 100 |
| VORATHERM™ CN 626 catalyst | 3 |
| VORANATE™ M 600 Isocyanate | 171 |
| n-pentane | 11 |
| *Isocyanate index of foam polymer* | 290 |

| **Fire Barrier layer forming composition B (parts by weight)** | |
|---|---|
| VORANOL™ CP 4702 Polyol | 100 |
| DABCO™ K2097 Catalyst | 1 |
| Expandable Graphite Quimidroga™ Grade 250 | 50.5 |
| VORANATE™ M 229 Isocyanate | 132 |
| *Isocyanate index of fire barrier layer polymer* | 1290 |
| *Amount of additive in reagent (wt%)* | 33 |
| *Amount of additive in fire barrier layer composition (wt* %) | 18 |

A pre-mixture of expandable graphite with the polyol component was delivered using a low-pressure gear pump to the mixing head of a SAIP low-pressure (LP) mix-dispensing machine, where it was mixed with the isocyanate component by means of a dynamic stirrer.

A SAIP™ continuous line was used. The process involved the following steps: i) feeding a lower facing as specified below, ii) dispensing of the fire barrier layer forming composition from the mix-dispensing machine, iii) dispensing of the PIR foam forming composition by means of a SAIP high-pressure (HP) mix-dispensing machine, iv) feeding an upper facing as specified below, v) allowing the PIR foam to rise and cure under the constrained rise of a heated double conveyor. The panel exiting the conveyor was cut to the desired length.

To achieve an even distribution of the fire barrier layer forming composition, the LP mixing head was connected to a discharging hose having an end travelling across the width of the conveyor by means of a swing bar.

To dispense the PIR foam forming composition the HP mixing head was connected to two fixed plastic pipes ("pokers") with holes centered at a distance of 38 mm, said two pokers being positioned side by side across the width of the line. This arrangement was shown to provide good foam homogeneity.

Importantly, the fire barrier layer forming composition was adjusted to have a gel time such that it gelled before the subsequent step of pouring the PIR foam forming composition (i.e. taking into consideration the distance between the two dispensing units and line speed). This was to achieve a sharp and distinct separation of the two layers which cannot be attained when the liquid layers are allowed to mix.

The following table sets out the main features of the panel produced:

**TABLE 2**

| | **Units** | **Panel features** |
|---|---|---|
| **Panel thickness** | mm | 100 |
| **Type of facings A** | | Steel |
| **Facing thickness** | mm | 0.5 |
| **Fire barrier layer thickness** | mm | 8-10 |
| **Fire barrier layer density** | g/l | 732 |
| **PIR foam core density** | g/l | 52 |
| **Tensile bond strength (bottom steel/fire barrier layer/foam)** | kPa | 220-373 (foam cohesive failure) |
| **Tensile bond strength (bottom steel/fire barrier layer)** | kPa | 361-680 (cohesive failure) |
| **Amount of expandable graphite per unit area** | g/m² | Approx 100-0 g/m² |

### Example 2

70 x 70 cm insulated metal panels having an overall thickness of 100 mm were prepared using a fire barrier layer forming composition and a foam core layer forming composition as in Example 1, and a further fire barrier layer of mineral wool (40 mm thickness, density 100 kg/m³, available from Rockwool Italia spa). Features of the fire barrier layer (thickness, density and amount of expandable graphite per unit area) and of the foam core (density) were as indicated in Table 2. The panels were as shown in Fig. 1, with a further fire barrier layer C present. The thickness of the foam core layer was 50-52 mm.

A continuous process generally as outlined in Example 1 was used. The mineral wool layer was added after dispensing of the fire barrier layer forming composition and before dispensing of the foam forming composition.

### Results

A medium scale fire resistance test was carried out on the panels using a furnace capable of following the temperature/time curve of the EN 1363-1 standard (in which insulation endurance failure is defined as an increase in temperature over room temperature of 180°C as measured with a thermocouple positioned on the "cold side"). "Hot side" (see drawing A) refers to the face of the panel closer to the heat source and "cold side" (see drawing B) refers to the side of the panel further away from the heat source. The "hot side" represents the side of the panel on which a fire occurs.

A panel with no fire barrier layer was used as a control.

The experimental results were as follows (where letters identify separate specimens tested):

**TABLE 3**

| **Failure time (min)** | | | | |
|---|---|---|---|---|
| **No fire barrier layer (control)** | **Example 1, single fire barrier layer on hot side** | **Example 1, single fire barrier layer on cold side** | **Example 2, two fire barrier layers on hot side** | **Example 2, two fire barriers layer on cold side** |
| (a) 37 | (d) 75 | (f) 54 | (h) 70 | (k) 61 |
| (b) 44 | (e) 54 | (g) 50 | (j) 68 | (l) 86 |
| (c) 38 | | | | |

The results showed that a fire barrier layer of expandable graphite in a high index PI polymer matrix (Example 1) was effective in improving fire resistance performance measured as failure time when positioned on the "hot side" and surprisingly also when positioned on the "cold side". Even better results were obtained when the fire barrier layer was combined with a further fire barrier layer of mineral wool (Example 2).

### Thermogravimetric analysis comparison of fire barrier layer polymers

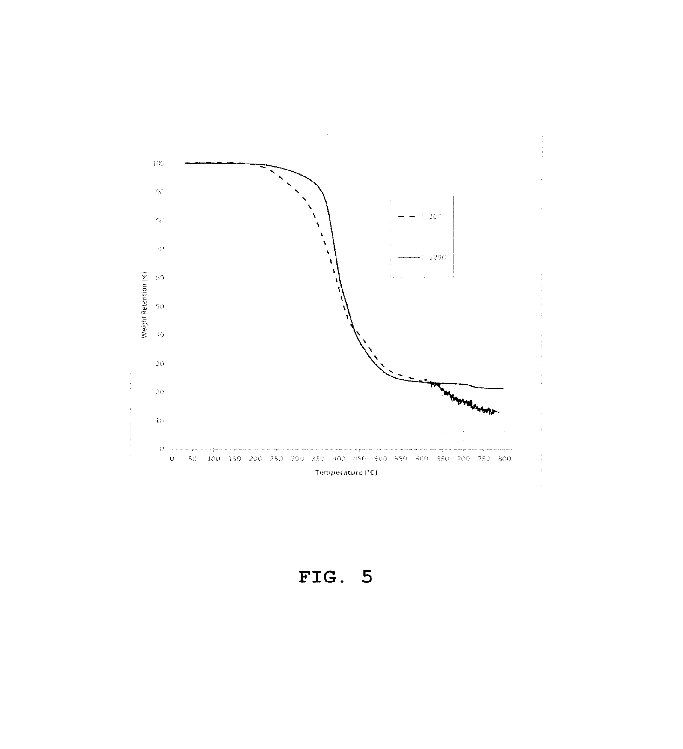

Thermogravimetric analysis was carried out on the PI polymer matrix used for the fire barrier layer of Example 1 (index 1290) and a comparative fire barrier layer polymer matrix with index 200 (as in Example 2-6 of PCT Patent Application No. PCT/EP2012/068069). A temperature ramp of 30 to 800°C at 10°C per minute was used. A nitrogen flux was used. The results are shown in Fig. 5. It can be seen that for most temperatures the high index PI polymer has a lower weight loss i.e. this polymer is more thermally stable.

### Physical properties of fire barrier layer

The glass transition temperature of the fire barrier layer of Example 1 was tested using differential scanning calorimetry (25-250 °C, 10 °C/min, nitrogen, aluminium pan). The onset of the transition was at 102 °C.

The compressive behaviour of the fire barrier layer of Example 1 was measured on specimens of dimension 50 x 10 x 4 mm according to Standard UNI EN ISO 604. The compressive load was applied in the direction of the main dimension (cross-section 10 x 4 mm) Results are shown in Table 4. The low brittleness is reflected in the relatively high deformation at break.

**TABLE 4**

| **Specimen Number** | **Modulus** | **Yield deformation** | **Yield Stress** | **Deformation at break** | **Stress at break** | **Max Stress** | **Comments** |
|---|---|---|---|---|---|---|---|
| | (MPa) | (%) | (kPa) | (%) | (kPa) | (kPa) | Integrity maintained during the test? (Y/N) |
| 1 | 90.7 | 22.2 | 11700 | 70.4 | 53000 | 53200 | Y |
| 2 | 96.3 | 24.1 | 11900 | 72.0 | 52200 | 52400 | Y |
| 3 | 93.5 | 21.3 | 11700 | 70.4 | 52100 | 52200 | Y |
| 4 | 65.1 | 23.9 | 9760 | 77.5 | 53100 | 53100 | Y |
| 5 | 68.6 | 26.8 | 11500 | 74.8 | 53200 | 53200 | Y |
| **Average** | **82.8** | **23.7** | **11300** | **73.0** | **52700** | **52900** | |

The panels of the preferred embodiments of the invention have very good fire resistance properties. Surprisingly, this applies even when the fire barrier layer is orientated away from the fire. Usually fire will occur inside a building. The findings thus imply that good fire resistance properties can be obtained when a fire barrier layer is positioned between the foam core and the external facing of a panel, whether or not a further fire barrier layer is positioned between the foam core and the internal facing of the panel.

The panels of the preferred embodiments of the invention also have good thermal stability and good mechanical properties. The use of PI in the fire barriers of preferred embodiments of the invention allows good adhesion to the metal facing and to the PIR foam core.

The findings can also be applied to joint protection.

Moreover, the panels of the preferred embodiments of the invention are easy to manufacture. As mentioned above, application of the fire barrier layer to the external (lower) facing allows the panels to be manufactured easily using a continuous process.

Whilst the invention has been described with reference to the illustrated preferred embodiments and the Examples, the skilled person will appreciate that various modifications are possible within the scope of the claims.

## Claims

1. A panel (10) comprising:
- a first metal facing (A1);
- an insulating foam layer (D); and
- a fire barrier layer (B) between the first metal facing (A1) and the foam layer (D), the fire barrier layer (B) comprising a dispersion of expandable graphite in a polyisocyanurate polymer matrix, wherein:
- the polymer matrix is formed by reaction at an index of more than 250 of an isocyanate-containing reactant and a polyol reactant comprising a long chain polyol of equivalent weight of more than 300; and
- the amount of expandable graphite per unit area of the panel is at least 200 g/m².

2. A panel (10) as claimed in Claim 1, further comprising a second metal facing (A2) on the opposite side of the foam layer (D) from the first metal facing (A1), and optionally further comprising a further fire barrier layer between the second metal facing (A2) and the foam layer (D).

3. A panel (10) as claimed in Claim 1 or Claim 2, wherein the fire barrier layer (B) is continuous and is continuously bonded to the metal facing(s) (A1; A2) and to the insulating foam layer (D).

4. A panel (10) as claimed in any one of the preceding claims, wherein the polymer matrix of the fire barrier layer is formed by reaction at an index of more than 700.

5. A panel (10) as claimed in any one of the preceding claims, wherein the long chain polyol is a polyether polyol or a polyester polyol.

6. A panel (10) as claimed in any one of the preceding claims, wherein the amount of expandable graphite per unit area of the panel is at least 500 g/m².

7. A panel (10) as claimed in any one of the preceding claims, comprising a further fire barrier layer (C) between the first metal facing (A1) and the foam layer (D).

8. A panel (10) as claimed in Claim 7, wherein the further fire barrier layer (C) comprises mineral wool.

9. A construction comprising one or more panels (10) as claimed in any one of the preceding claims, optionally with at least one first metal facing (A1) orientated towards the outside of the construction.

10. A method of forming a panel (10) as claimed in any one of Claims 1 to 8, comprising the steps of:
- providing a first metal facing (A1) with a fire barrier layer (B) in the form of a liquid reaction mixture comprising a dispersion in an isocyanate-based reaction mixture of expandable graphite; and
- applying an insulating foam layer (D) in the form of a liquid reaction mixture to the fire barrier layer (B).

11. A method as claimed in Claim 10, further comprising applying a second metal facing (A2) to the insulating foam layer (D).

12. A method as claimed in Claim 10 or Claim 11, wherein the first metal facing (A1) is a lower facing and the liquid reaction mixture for forming the fire barrier layer is applied to an upper surface of the lower facing.

13. A method as claimed in any one of Claims 10 to 12, wherein the method is continuous.

14. A panel arrangement comprising:
- two or more adjacent panels (10), optionally as claimed in any one of Claims 1 to 8, each panel (10) comprising a metal facing (A1) and an insulating foam layer (D), and
- a fire barrier material (B) located in a joint region between adjacent panels (10),
wherein the fire barrier material (B) comprises a dispersion of expandable graphite in a polyisocyanurate polymer matrix, wherein;
the polymer matrix is formed by reaction at an index of more than 250 of an isocyanate-containing reactant and a polyol reactant comprising a long chain polyol of equivalent weight more than 300; and
the amount of expandable graphite per unit area is at least 200 g/m².

15. A panel (10) optionally as claimed in any one of Claims 1 to 8 comprising:
- a first metal facing (A1) to be orientated towards the outside of a construction in use;
- a second metal facing (A2) to be orientated towards the inside of the construction in use;
- an insulating foam layer (D) between the first and second metal facings (A1; A2); and
- a fire barrier layer (B) between the first metal facing (A1) and the foam layer (D),
wherein no fire barrier layer is present between the second metal facing (A2) and the foam layer (D), or wherein any fire barrier layer present between the second metal facing (A2) and the foam layer (D) has a weight of no more than 1000 g/m² or a thickness of no more than 0.3 mm.
